# EUROPEAN PATENT APPLICATION

(11) **EP 4 625 593 A1**
(43) Date of publication of application: **01.10.2025**
(21) Application number: 24202760.5
(22) Date of filing: 26.09.2024
(51) Int. Cl.: H01M 10/0587, H01M 10/28, H01M 50/107, H01M 50/533, H01M 50/536

(54) **CYLINDRICAL BATTERY AND POWER CONSUMPTION DEVICE HAVING SAME**

(30) Priority: 29.03.2024 CN 202410390040
(71) Applicant: BYD Company Limited, Shenzhen, Guangdong 518118 (CN)
(72) Inventor: Yao, Lyuhua, Shenzhen, Guangdong 518118 (CN); Wang, Jianjun, Shenzhen, Guangdong 518000 (CN)
(74) Representative: Mathys & Squire

(57) **Abstract**

The present disclosure discloses a cylindrical battery and a power consumption device having same. The cylindrical battery includes an electrode core and a current collector. The electrode core is formed in a cylindrical shape. A tab welding region is arranged on at least one side of the electrode core along an axial direction of the electrode core. The current collector is adapted to weld to the tab welding region. An outer ring region, a middle ring region, and an inner ring region are arranged on the current collector from outside to inside along a direction parallel to a radial direction of the electrode core. The middle ring region is located between the outer ring region and the inner ring region. A first weld pattern is arranged in the middle ring region. A second weld pattern is arranged in at least one of the inner ring region or the outer ring region. The first weld pattern extends along the radial direction of the electrode core. The second weld pattern extends along a circumferential direction of the electrode core. The current collector is welded to the tab welding region through the first weld pattern and the second weld pattern. According to the cylindrical battery in embodiments of the present disclosure, the current collector is welded to the tab welding region, and quality of the welding can also be ensured, thereby avoiding poor welding or over welding to a certain extent, and improving performance of the cylindrical battery.

## Description

### FIELD

Embodiments of the present disclosure relate to the field of battery technologies, and specifically, to a cylindrical battery and a power consumption device having same.

### BACKGROUND

Because of advantages such as good consistency, high energy density, and small internal resistance, cylindrical batteries are widely used in various types of power consumption devices.

However, in an existing cylindrical battery, when tabs of an electrode core are welded to a current collector, cyclical spot welding is usually used. In the welding manner, due to uncontrollable heat superposition, poor welding or over welding is easily caused, degrading performance of the cylindrical battery.

### SUMMARY

The present disclosure is to resolve at least one of technical problems in the related art. Therefore, the present disclosure provides a cylindrical battery. The cylindrical battery can ensure a welding effect between a current collector and tabs to a certain extent, thereby avoiding poor welding or over welding to a certain extent, and improving performance of the cylindrical battery. In this way, the technical problem in the related art that poor welding or over welding is easily caused between the tabs and the current collector is resolved.

The present disclosure further aims to provide a power consumption device having the foregoing cylindrical battery.

The cylindrical battery according to embodiments of the present disclosure includes an electrode core and a current collector. The electrode core is formed in a cylindrical shape. A tab welding region is arranged on at least one side of the electrode core along an axial direction of the electrode core. The current collector is adapted to weld to the tab welding region. An outer ring region, a middle ring region, and an inner ring region are arranged on the current collector from outside to inside along a direction parallel to a radial direction of the electrode core. The middle ring region is located between the outer ring region and the inner ring region. A first weld pattern is arranged in the middle ring region. A second weld pattern is arranged in at least one of the inner ring region or the outer ring region. The first weld pattern extends along the radial direction of the electrode core. The second weld pattern extends along a circumferential direction of the electrode core. The current collector is welded to the tab welding region through the first weld pattern and the second weld pattern.

According to the cylindrical battery in the embodiments of the present disclosure, the first weld pattern extending along the radial direction of the electrode core is arranged in the middle ring region of the current collector, and the second weld pattern extending along the circumferential direction of the electrode core is arranged in at least one of the inner ring region or the outer ring region of the current collector, to form weld patterns with different extension directions on the current collector. In this way, when the current collector is welded to the tab welding region through the first weld pattern and the second weld pattern, the current collector can be welded to the tab welding region, a welding area between the current collector and the tab welding region can also be ensured, and quality of welding the current collector to the tab welding region can be improved, thereby avoiding poor welding or over welding to a certain extent, and improving performance of the cylindrical battery.

In some embodiments, along the radial direction of the electrode core, the electrode core includes a number of tabs. The number of tabs are bent inward to define the tab welding region. A bent length of each tab is L1. A radial dimension of the inner ring region is H1. A radial dimension of the outer ring region is H2. The cylindrical battery satisfies: 0.8L1<H1<1.3L1, and/or 0.8L1<H2<1.3L1.

In some embodiments, the second weld pattern is arranged in the outer ring region. Along the direction parallel to the radial direction of the electrode core, a spacing H3 exists between an outermost second weld pattern in the outer ring region and an outer peripheral wall of the electrode core.

In some embodiments, the spacing H3 is greater than or equal to 2 mm.

In some embodiments, at least one second weld pattern is arranged in the outer ring region, and a radial width of each second weld pattern in the outer ring region is less than or equal to 0.5 mm. In addition/alternatively, at least one second weld pattern is arranged in the inner ring region, and a radial width of each second weld pattern in the inner ring region is less than or equal to 0.5 mm.

In some embodiments, the second weld pattern in the outer ring region is formed in an arc shape, a straight line shape, or a wave shape.

In some embodiments, a number of second weld patterns arranged at intervals along the radial direction of the electrode core are arranged in the outer ring region.

In some embodiments, a number of second weld patterns arranged at intervals along the radial direction of the electrode core are arranged in the inner ring region.

In some embodiments, a value of a spacing between radially adjacent second weld patterns in the inner ring region ranges from 0.3 mm to 1.5 mm.

In some embodiments, the second weld pattern in the inner ring region is formed in an arc shape, a straight line shape, or a wave shape.

In some embodiments, along the direction parallel to the radial direction of the electrode core, a spacing H4 exists between an innermost second weld pattern in the inner ring region and an inner edge of the tab welding region. The innermost second weld pattern in the inner ring region is located on a radial outer side of the inner edge of the tab welding region.

In some embodiments, the spacing H4 is greater than or equal to 2 mm.

In some embodiments, the first weld pattern is formed as a continuously extending weld pattern. Alternatively, the first weld pattern includes a number of weld subpatterns arranged at intervals along the radial direction of the electrode core.

In some embodiments, along the circumferential direction of the electrode core, a number of weld pattern groups arranged at intervals along the circumferential direction of the electrode core are arranged on the current collector. Each weld pattern group includes first weld patterns and second weld patterns.

In some embodiments, each weld pattern group includes at least one first weld pattern group. Each first weld pattern group includes a number of first weld patterns arranged at intervals along the circumferential direction of the electrode core.

In some embodiments, each first weld pattern group includes the number of first weld patterns arranged in parallel.

In some embodiments, at least a part of the first weld patterns in each first weld pattern group intersect. When a number of intersections exist, a spacing between adjacent intersections is greater than 2 mm.

In some embodiments, each weld pattern group includes a number of first weld pattern groups arranged at intervals along the circumferential direction of the electrode core. Each first weld pattern group includes a number of first weld patterns arranged at intervals along the circumferential direction of the electrode core. Second weld patterns are arranged on both a radial inner side and a radial outer side of each first weld pattern group.

In some embodiments, each weld pattern group includes a number of outer ring second weld pattern groups arranged corresponding to the number of first weld pattern groups, the number of outer ring second weld pattern groups are arranged in the outer ring region and located on radial outer sides of the first weld pattern groups, and each outer ring second weld pattern group includes a number of second weld patterns arranged at intervals along the radial direction of the electrode core. In addition/alternatively, each weld pattern group includes a number of inner ring second weld pattern groups arranged corresponding to the number of first weld pattern groups, the number of inner ring second weld pattern groups are arranged in the inner ring region and located on radial inner sides of the first weld pattern groups, and each inner ring second weld pattern group includes a number of second weld patterns arranged at intervals along the radial direction of the electrode core.

In some embodiments, each weld pattern group includes a number of outer ring second weld pattern groups arranged corresponding to the number of first weld pattern groups and one inner ring second weld pattern group. The number of outer ring second weld pattern groups are arranged in the outer ring region and located on radial outer sides of the first weld pattern groups. Each outer ring second weld pattern group includes a number of second weld patterns arranged at intervals along the radial direction of the electrode core. The inner ring second weld pattern group is arranged in the inner ring region and located in radial inner sides of the number of first weld pattern groups. The inner ring second weld pattern group includes a number of second weld patterns arranged at intervals along the radial direction of the electrode core.

In some embodiments, the second weld pattern in the outer ring second weld pattern group and the second weld pattern in the inner ring second weld pattern group are formed in respectively independent arc shapes, straight line shapes, or wave shapes.

The power consumption device according to the embodiments of the present disclosure includes the foregoing cylindrical battery.

According to the power consumption device in the embodiments of the present disclosure, the foregoing cylindrical battery is used, to improve operating performance of the power consumption device.

The advantages of the additional aspects of the present disclosure will become apparent from the description below, or will be understood by the practice of the present disclosure.

### BRIEF DESCRIPTION OF THE DRAWINGS

The foregoing and/or additional aspects and advantages of the present disclosure will become apparent and comprehensible in the embodiment description made with reference to the following drawings.
FIG. 1 is a schematic diagram of a cylindrical battery according to some embodiments of the present disclosure;
FIG. 2 is a schematic diagram of a process of welding tabs to a current collector according to some embodiments of the present disclosure;
FIG. 3 is an enlarged view of a partial structure in FIG. 2;
FIG. 4 is a schematic diagram after tabs are welded to a current collector according to some embodiments of the present disclosure;
FIG. 5 is a schematic diagram of a current collector according to some embodiments of a first aspect of the present disclosure;
FIG. 6 is a schematic diagram of tabs and weld patterns according to some embodiments of the present disclosure;
FIG. 7 is a partially enlarged view of a region I in FIG. 6;
FIG. 8 is a schematic diagram of tabs of an electrode core in a smoothing process according to some embodiments of the present disclosure;
FIG. 9 is a schematic diagram of a current collector according to some embodiments of a second aspect of the present disclosure;
FIG. 10 is a schematic diagram of a current collector according to some embodiments of a third aspect of the present disclosure; and
FIG. 11 is a schematic diagram of a current collector according to some embodiments of a fourth aspect of the present disclosure.

In the drawings:
1000: cylindrical battery;
100: electrode core;
110: tab welding region;
120: tab;
200: current collector;
210: outer ring region;
220: middle ring region;
230: inner ring region;
240: weld pattern group;
241: first weld pattern; 2411: weld subpattern;
242: second weld pattern;
243: first weld pattern group;
244: outer ring second weld pattern group;
245: inner ring second weld pattern group;
250: first connecting portion;
260: second connecting portion; and
300: housing.

### DETAILED DESCRIPTION

Embodiments of the present disclosure are described in detail below, and examples of the embodiments are shown in drawings, where the same or similar elements or the elements having same or similar functions are denoted by the same or similar reference numerals throughout the description. The embodiments described below with reference to the drawings are exemplary, and are intended to explain the present disclosure and cannot be construed as a limitation to the present disclosure.

In the description of the present disclosure, it should be understood that, orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are used only for ease and brevity of illustration and description of the present disclosure, rather than indicating or implying that the mentioned apparatus or component necessarily has a particular orientation or is necessarily constructed and operated in a particular orientation. Therefore, such terms should not be construed as a limitation on the present disclosure.

In the description of the present disclosure, a feature defined by "first" or "second" may explicitly or implicitly include one or more features, to distinguish the described features. An execution order and importance of the features are not limited.

In the description of the present disclosure, unless otherwise stated, "a number of" means two or more than two.

The following describes a cylindrical battery 1000 according to the embodiments of the present disclosure with reference to the drawings of this specification.

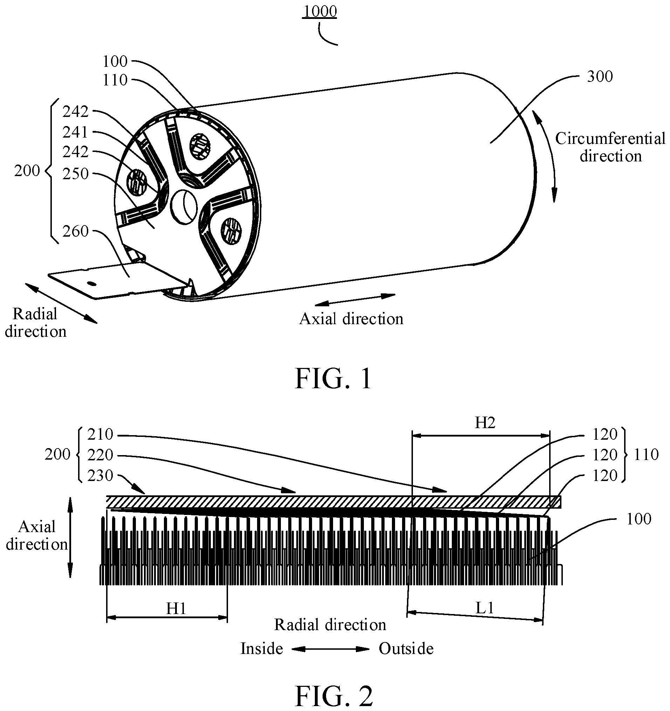

As shown in FIG. 1, the cylindrical battery 1000 according to the embodiments of the present disclosure includes an electrode core 100 and a current collector 200.

The electrode core 100 is formed in a cylindrical shape. As shown in FIG. 1, a tab welding region 110 is arranged on at least one side of the electrode core 100 along an axial direction of the electrode core 100. In other words, the tab welding region 110 may be arranged on one side of the electrode core 100 along the axial direction, or may be arranged on two sides of the electrode core 100 along the axial direction, thereby implementing an electrical connection between the electrode core 100 and the current collector 200 by using the tab welding region 110, reducing difficulty of connecting the electrode core 100 to the current collector 200, and ensuring operating performance of the cylindrical battery 1000.

In addition, the electrode core 100 is arranged in the cylindrical shape, so that it can be ensured that a battery after formation is formed as the cylindrical battery 1000, thereby ensuring the operating performance of the battery.

In some embodiments, as shown in FIG. 1, the cylindrical battery 1000 further includes a housing 300. The electrode core 100 is arranged in the housing 300. In this way, the electrode core 100 can be protected by the housing 300, to prolong the service life and usage safety of the electrode core 100. In addition, the electrode core 100 can be supported by the housing 300, to improve positional stability of the electrode core 100.

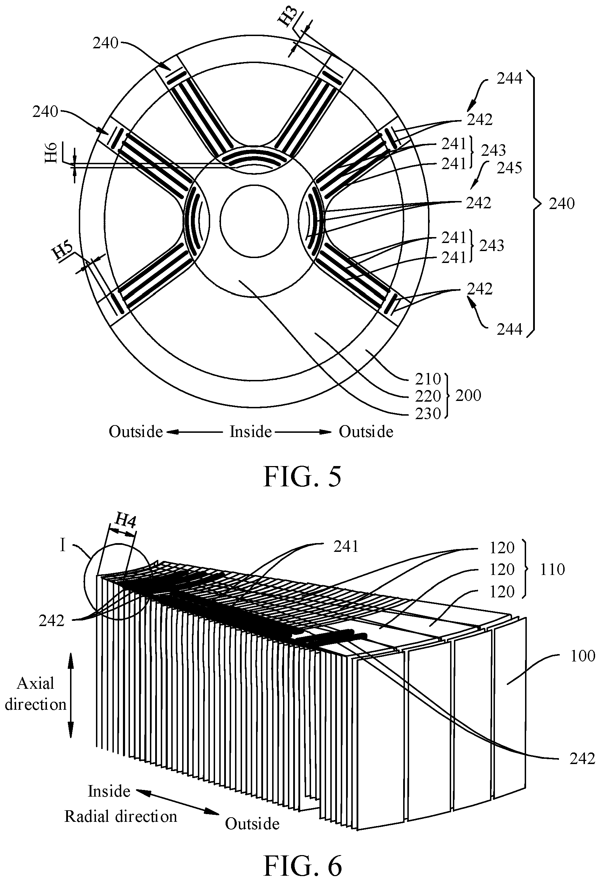

As shown in FIG. 1, FIG. 2, and FIG. 4, the current collector 200 is adapted to weld to the tab welding region 110. An outer ring region 210, a middle ring region 220, and an inner ring region 230 are arranged on the current collector 200 from outside to inside along a direction parallel to a radial direction of the electrode core 100 (as shown in FIG. 1 and FIG. 5). The middle ring region 220 is located between the outer ring region 210 and the inner ring region 230. A first weld pattern 241 is arranged in the middle ring region 220. A second weld pattern 242 is arranged in at least one of the inner ring region 230 or the outer ring region 210. The first weld pattern 241 extends along the radial direction of the electrode core 100. The second weld pattern 242 extends along a circumferential direction of the electrode core 100. The current collector 200 is welded to the tab welding region 110 through the first weld pattern 241 and the second weld pattern 242. It may also be understood that the outer ring region 210, the middle ring region 220, and the inner ring region 230 on the current collector 200 are successively arranged from outside to inside along the direction parallel to the radial direction of the electrode core 100. In this way, the middle ring region 220 is arranged between the outer ring region 210 and the inner ring region 230, the outer ring region 210 is arranged on an outer side of the middle ring region 220, and the inner ring region 230 is arranged on an inner side of the middle ring region 220.

It should be noted that, the outer ring region 210, the middle ring region 220, and the inner ring region 230 are obtained through division on a region of the current collector 200 along the direction parallel to the radial direction of the electrode core 100. For ease of description, specific positions, covered areas, and the like of the outer ring region 210, the middle ring region 220, and the inner ring region 230 on the current collector 200 may be adaptively adjusted according to a structure of the current collector 200 and a structure of the tab welding region 110, and are not specifically limited. In addition, existence of the outer ring region 210 and the inner ring region 230 is independent of whether the second weld pattern 242 exists.

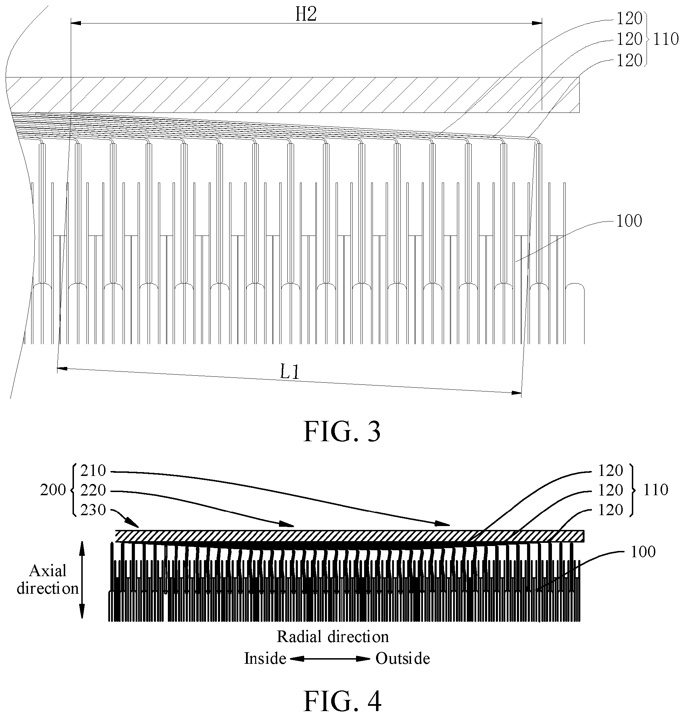

It should also be noted that, the tab welding region 110 on an end surface of the cylindrical battery 1000 is generally formed as a stacked structure after formation. In this way, along the radial direction of the electrode core 100, thicknesses of the tab welding region 110 corresponding to the outer ring region 210 and the inner ring region 230 are different (as shown in FIG. 2 and FIG. 4). A thickness of the tab welding region 110 corresponding to the outer ring region 210 gradually becomes thicker along a direction from outside to inside, and a thickness of the tab welding region 110 corresponding to the inner ring region 230 gradually becomes thinner along the direction from outside to inside, but a thickness of the tab welding region 110 corresponding to the middle ring region 220 is the same along the direction from outside to inside. In this case, if weld patterns in the outer ring region 210, the middle ring region 220, and the inner ring region 230 are all arranged to extend along the radial direction of the electrode core 100, a part of weld patterns in the outer ring region 210 and the inner ring region 230 penetrate the tab welding region 110, and a welding area between a part of the weld patterns and the tab welding region 110 is small. As a result, poor welding and over welding are easily caused, and a welding effect between the current collector 200 and the tab welding region 110 is affected.

In other words, a region with different thicknesses in the corresponding tab welding region 110 on the current collector 200 is defined as the outer ring region 210 or the inner ring region 230, and a region with a same thickness in the corresponding tab welding region 110 on the current collector 200 is defined as the middle ring region 220. When the thickness of the corresponding tab welding region 110 on the current collector 200 gradually becomes thicker along the direction from outside to inside, the region is defined as the outer ring region 210. When the thickness of the corresponding tab welding region 110 on the current collector 200 gradually becomes thinner along the direction from outside to inside, the region is defined as the inner ring region 230.

Based on this, in the present disclosure, the first weld pattern 241 extending along the radial direction of the electrode core 100 is arranged in the middle ring region 220, and the second weld pattern 242 extending along the circumferential direction of the electrode core 100 is arranged in at least one of the inner ring region 230 or the outer ring region 210. In this way, when the current collector 200 is welded to the tab welding region 110 through the first weld pattern 241 and the second weld pattern 242, thicknesses of the tab welding region 110 to which the first weld pattern 241 and the second weld pattern 242 are welded can be the same. In this way, poor welding or over welding of the first weld pattern 241 and the second weld pattern 242 is avoided, thereby ensuring quality of welding the current collector 200 to the tab welding region 110 to a certain extent, and improving the operating performance of the cylindrical battery 1000.

It should also be noted that, that the first weld pattern 241 extends along the radial direction of the electrode core 100 may mean that the first weld pattern 241 extends along the direction parallel to the radial direction of the electrode core 100, or may mean that the first weld pattern 241 extends along a direction having an angle with the radial direction of the electrode core 100. In other words, an extension direction of the first weld pattern 241 may be parallel to the radial direction of the electrode core 100, or may have an angle with the radial direction of the electrode core 100. Correspondingly, that the second weld pattern 242 extends along the circumferential direction of the electrode core 100 may mean that the second weld pattern 242 extends along a direction parallel to the circumferential direction of the electrode core 100, or may mean that the second weld pattern 242 extends along a direction having an angle with the circumferential direction of the electrode core 100.

In addition, in the present disclosure, the first weld pattern 241 is arranged in the middle ring region 220, and the second weld pattern 242 is arranged in at least one of the inner ring region 230 or the outer ring region 210. In this way, weld pattern design is performed on at least one of the inner ring region 230 or the outer ring region 210, and the middle ring region 220 on the current collector 200. Compared with that a weld pattern is arranged in only the middle ring region 220 in the related art, a welding area between the current collector 200 and the electrode core 100 can be effectively increased. In this way, when stability of welding the current collector 200 to the electrode core 100 is ensured, overcurrent can also be formed on at least one of the inner ring region 230 or the outer ring region 210 of the current collector 200, and an overcurrent capability of the current collector 200 can be improved, thereby improving the performance of the cylindrical battery 1000.

In conclusion, in the present disclosure, a welding surface of the current collector 200 is partitioned according to a difference in thicknesses of the tab welding region 110, and different weld pattern styles are used for welding. In this way, it is ensured that thicknesses of the tab welding region 110 to which different weld patterns are welded are the same, welding energy can be finely controlled, and poor welding or over welding is avoided, thereby ensuring the welding effect between the current collector 200 and the tab welding region 110 to a certain extent, and improving the operating performance of the cylindrical battery 1000.

It can be learned from the foregoing structure that, according to the cylindrical battery 1000 in the embodiments of the present disclosure, based on the performance that the tab welding region 110 on the end surface of the cylindrical battery 1000 is formed as the stacked structure after the formation, the welding surface of the current collector 200 is partitioned, to control extension directions of weld patterns in different regions. In this way, thicknesses of the weld tab welding region 110 to which the weld patterns are welded are the same when the current collector 200 is welded to the electrode core 100, and poor welding or over welding between the first weld pattern 241 and the second weld pattern 242 is avoided, thereby ensuring the welding effect between the current collector 200 and the tab welding region 110, and improving the operating performance of the cylindrical battery 1000.

For a relative positional relationship among the first weld pattern 241, the second weld pattern 242, and the tab welding region 110, reference may also be made to FIG. 6.

It may be understood that, compared with the related art, in the present disclosure, the welding surface of the current collector 200 is partitioned according to a change in the thicknesses of the tab welding region 110, and extension directions of weld patterns in different regions are defined. In this way, the thicknesses of the tab welding region 110 to which the first weld pattern 241 and the second weld pattern 242 are welded are the same, and poor welding or over welding is avoided, thereby improving the operating performance of the cylindrical battery 1000.

In some embodiments, the current collector 200 is arranged at an axial end portion of the electrode core 100, so that the current collector 200 is arranged close to the tab welding region 110 of the electrode core 100. In this way, the current collector 200 can be welded to the tab welding region 110, and difficulty of welding the current collector 200 to the tab welding region 110 can be reduced, thereby reducing difficulty of connecting the current collector 200 to the electrode core 100.

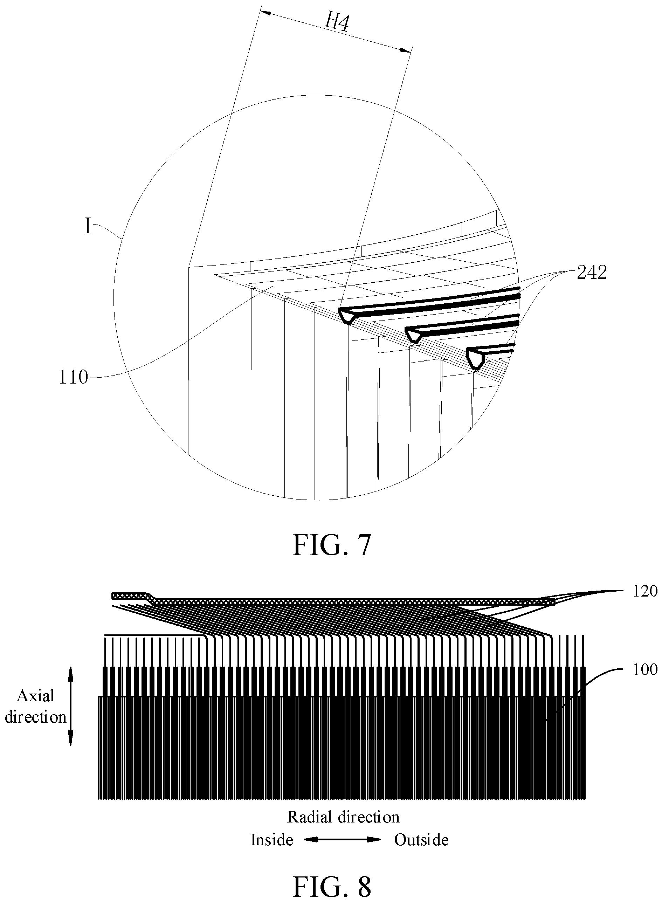

It should be noted that, in an example in which the cylindrical battery 1000 is specifically formed, the tab welding region 110 is first smoothed, that is, the tab welding region 110 is smoothed from outside to inside along the radial direction of the electrode core 100. In a process of smoothing the tab welding region 110, as shown in FIG. 8, a number of tabs 120 in the tab welding region 110 are bent inward. After the bending, as shown in FIG. 2, the current collector 200 is arranged at the end portion of the tab welding region 110. In this case, the thickness of the tab welding region 110 corresponding to the outer ring region 210 gradually becomes thicker along the direction from outside to inside, the thickness of the tab welding region 110 corresponding to the inner ring region 230 gradually becomes thinner along the direction from outside to inside, and the thickness of the tab welding region 110 corresponding to the middle ring region 220 is the same along the direction from outside to inside. Subsequently, the current collector 200 is welded to the tab welding region 110, the first weld pattern 241 in the middle ring region 220 is controlled to extend along the radial direction of the electrode core 100, and the second weld pattern 242 in at least one of the inner ring region 230 or the outer ring region 210 is controlled to extend along the circumferential direction of the electrode core 100. In this way, the thicknesses of the tab welding region 110 to which the first weld pattern 241 and the second weld pattern 242 are welded are the same, and poor welding or over welding between the first weld pattern 241 and the second weld pattern 242 is avoided.

It should also be noted that, to ensure that the current collector 200 can be welded to the tab welding region 110 with different thicknesses, in a specific process of welding the current collector 200 to the tab welding region 110, the current collector 200 needs to be pressed toward the tab welding region 110, as shown in FIG. 4. In this case, a pole piece facing the tab welding region 110 with a thick thickness is bent and deformed, to ensure that the current collector 200 can be welded to the tab welding regions 110 with the different thicknesses. In this way, a connection area between the current collector 200 and the tab welding region 110 is ensured to a certain extent, and the overcurrent capability of the current collector 200 is improved.

In some embodiments, the thickness of the tab welding region 110 facing the middle ring region 220 is about 0.11 mm. When the thickness of the tab welding region 110 facing the middle ring region 220 is thin, the first weld pattern 241 easily penetrates the tab welding region 110, and a separator is easily scalded, reducing the welding effect between the current collector 200 and the tab welding region 110. When the thickness of the tab welding region 110 is thick, quality of welding the first weld pattern 241 to the tab welding region 110 is affected, affecting the overcurrent capability of the current collector 200.

Therefore, in the present disclosure, the thickness of the tab welding region 110 facing the middle ring region 220 is set to about 0.11 mm, thereby ensuring the welding effect between the current collector 200 and the tab welding region 110, and improving the overcurrent capability of the current collector 200.

In a specific example, the number of tabs 120 are bent inward to define the tab welding region 110, and a quantity of tabs 120 facing the middle ring region 220 may be set to about 13. In this way, the thickness of the tab welding region 110 facing the middle ring region 220 can be about 0.11 mm, thereby ensuring the welding effect between the current collector 200 and the tab welding region 110.

Certainly, in some other embodiments, the thickness of the tab welding region 110 and the quantity of tabs 120 that face the middle ring region 220 may also be defined according to a specific structure of the cylindrical battery 1000, and in the process of welding the current collector 200 to the tab welding region 110, welding power is defined according to an actual situation, thereby ensuring the welding effect between the current collector 200 and the tab welding region 110.

In some embodiments, as shown in FIG. 1, the current collector 200 includes a first connecting portion 250 and a second connecting portion 260 connected to each other. The second connecting portion 260 is configured to perform an electrical connection (not shown in the figure) of a terminal of the cylindrical battery 1000. The outer ring region 210, the middle ring region 220, and the inner ring region 230 are arranged on the first connecting portion 250. The first weld pattern 241 is arranged in the middle ring region 220. The second weld pattern 242 is arranged in at least one of the inner ring region 230 or the outer ring region 210. In this way, the first connecting portion 250 can be welded to the tab welding region 110, thereby implementing the electrical connection between the electrode core 100 and the terminal, and ensuring the operating performance of the cylindrical battery 1000. In addition, through the foregoing arrangement, quality of connecting the current collector 200 to the electrode core 100 can also be ensured.

In some embodiments, as shown in FIG. 2, FIG. 4, and FIG. 8, along the radial direction of the electrode core 100, the electrode core 100 includes the number of tabs 120. The number of tabs 120 are bent inward to define the tab welding region 110. A bent length of each tab 120 is L1 (for details, refer to FIG. 2 and FIG. 3). A radial dimension of the inner ring region 230 is H1. A radial dimension of the outer ring region 210 is H2. The cylindrical battery 1000 satisfies: 0.8L1≤H1≤1.3L1, and/or 0.8L1≤H2≤1.3L1. The bent length of the tab 120 described herein may be understood as a length of each tab 120 in the tab welding region 110 after being bent, that is, a length of the tab 120 extending from outside to inside along the radial direction of the electrode core 100, that is, L1 shown in FIG. 2 and FIG. 3. In this way, when the cylindrical battery 1000 is set to satisfy: 0.8L1≤H1≤1.3L1, and/or 0.8L1≤H2≤1.3L1, it can be ensured that the thickness of the tab welding region 110 corresponding to the inner ring region 230 gradually becomes thinner along the direction from outside to inside, the thickness of the tab welding region 110 corresponding to the outer ring region 210 gradually becomes thicker along the direction from outside to inside, and the thickness of the tab welding region 110 corresponding to the middle ring region 220 is the same along the direction from outside to inside. In this way, when the first weld pattern 241 extending along the radial direction of the electrode core 100 is arranged in the middle ring region 220, and the second weld pattern 242 extending along the circumferential direction of the electrode core 100 is arranged in at least one of the inner ring region 230 or the outer ring region 210, it can be ensured that the thicknesses of the tab welding region 110 to which the first weld pattern 241 and the second weld pattern 242 are welded are the same, and poor welding or over welding between the first weld pattern 241 and the second weld pattern 242 is avoided, thereby ensuring the quality of welding the current collector 200 to the tab welding region 110 to a certain extent, and improving the operating performance of the cylindrical battery 1000.

In other words, through the foregoing arrangement, it can be ensured that a region that the thickness of the tab welding region 110 gradually becomes thinner along the direction from outside to inside belongs to an inner ring welding region, and a region that the thickness of the tab welding region 110 gradually becomes thicker along the direction from outside to inside belongs to an outer ring welding region. A middle ring welding region is located between the inner ring welding region and the outer ring welding region. Stacked thicknesses of a number of tabs 120 in the middle ring welding region are consistent.

It should be noted that, a radial width of the middle ring region 220 is mainly determined according to a diameter of the cylindrical battery 1000. The radial width of the middle ring region 220 is equal to a radius of the electrode core 100 minus a radius of a winding hole, a radial width of the inner ring region 230, and a radial width of the outer ring region 210.

In some embodiments, as shown in FIG. 2, no tab 120 is arranged on a pole piece close to a radial inner side of the electrode core 100. Because the tab welding region 110 is formed by bending inward the number of tabs 120, when a tab 120 is arranged in a region on the radial inner side of the electrode core 100, after the tab 120 is bent, the winding hole of the cylindrical battery 1000 is easily blocked by the tab welding region 110, affecting a liquid filling effect and a venting effect of the cylindrical battery 1000. As a result, performance and safety of the cylindrical battery 1000 are reduced. In the present disclosure, through the foregoing arrangement, it can be ensured that the tab welding region 110 can effectively avoid the winding hole of the cylindrical battery 1000, thereby improving the performance and the safety of the cylindrical battery 1000.

Certainly, in some other examples, a tab 120 (not shown in the figure of this example) may alternatively be arranged on the pole piece close to the radial inner side of the electrode core 100. After the tab 120 is bent inward and formed or before the tab 120 is bent, the tab 120 is cut out, to ensure that the tab welding region 110 can avoid the winding hole of the cylindrical battery 1000. In this way, the performance and the safety of the cylindrical battery 1000 can also be improved.

In some embodiments, as shown in FIG. 1 and FIG. 5, the second weld pattern 242 is arranged in the outer ring region 210. Along the direction parallel to the radial direction of the electrode core 100, a spacing H3 exists between an outermost second weld pattern 242 in the outer ring region 210 and an outer peripheral wall of the electrode core 100. In other words, when the second weld pattern 242 is arranged in the outer ring region 210, the outermost second weld pattern 242 in the outer ring region 210 is arranged spaced away from the outer peripheral wall of the electrode core 100. Because the thickness of the tab welding region 110 corresponding to the outer ring region 210 gradually becomes thicker along the direction from outside to inside, a thickness of the tab welding region 110 close to the outer peripheral wall of the electrode core 100 is thin. When the outermost second weld pattern 242 in the outer ring region 210 is close to the outer peripheral wall of the electrode core 100, a thickness of the tab welding region 110 facing the second weld pattern 242 is thin. In this case, when the current collector 200 is welded to the tab welding region 110 through the second weld pattern 242, the second weld pattern 242 easily penetrates the tab welding region 110, and the separator is easily scalded, reducing the performance of the cylindrical battery 1000.

Therefore, in the present disclosure, the outermost second weld pattern 242 in the outer ring region 210 is arranged spaced away from the outer peripheral wall of the electrode core 100, to prevent the second weld pattern 242 from penetrating the tab welding region 110, thereby ensuring the welding effect.

In some embodiments, the spacing H3 is greater than or equal to 2 mm, to ensure a thickness of the tab welding region 110 facing the outermost second weld pattern 242 in the outer ring region 210, and prevent the second weld pattern 242 in the outer ring region 210 from penetrating the tab welding region 110, thereby ensuring the welding effect.

In some embodiments, as shown in FIG. 1 and FIG. 5, a number of second weld patterns 242 arranged at intervals along the radial direction of the electrode core 100 are arranged in the outer ring region 210. In other words, the number of second weld patterns 242 are arranged in the outer ring region 210, and the number of second weld patterns 242 are arranged at intervals along the radial direction of the electrode core 100. The number of second weld patterns 242 cooperate to increase a connection area between the outer ring region 210 and the tab welding region 110. In this way, when the overcurrent capability of the current collector 200 is improved, strength of connecting the outer ring region 210 to the tab welding region 110 can also be ensured, so that relative positions of the outer ring region 210 and the tab welding region 110 are stable, and the operating performance of the current collector 200 is ensured.

In addition, the number of second weld patterns 242 in the outer ring region 210 are arranged at intervals along the radial direction of the electrode core 100, so that the number of second weld patterns 242 in the outer ring region 210 can be prevented from coming into contact. Because the thickness of the tab welding region 110 facing the outer ring region 210 along the radial direction of the electrode core 100 is different, if the number of second weld patterns 242 in the outer ring region 210 come into contact, over welding may occur in the tab welding region 110 with a thin thickness, and the separator is easily scalded. Therefore, the number of second weld patterns 242 in the outer ring region 210 are arranged at intervals along the radial direction of the electrode core 100, thereby avoiding over welding to a certain extent, and improving the operating performance of the cylindrical battery 1000.

In some embodiments, as shown in FIG. 5, a distance H5 between two adjacent second weld patterns 242 in the outer ring region 210 ranges from 0.3 mm to 1.5 mm. When the distance between the two adjacent second weld patterns 242 in the outer ring region 210 is short, the two adjacent second weld patterns 242 in the outer ring region 210 easily come into contact, causing over welding of the tab welding region 110 with a thin thickness. When the distance between the two adjacent second weld patterns 242 in the outer ring region 210 is long, a large quantity of second weld patterns 242 cannot be arranged in the outer ring region 210, affecting the overcurrent capability of the current collector 200.

Therefore, in the present disclosure, the distance between the two adjacent second weld patterns 242 in the outer ring region 210 is set to range from 0.3 mm to 1.5 mm. In this way, when the two adj acent second weld patterns 242 in the outer ring region 210 are prevented from coming into contact, a large quantity of second weld patterns 242 can also be arranged in the outer ring region 210, thereby improving the overcurrent capability of the current collector 200.

In a specific example, the distance between the two adjacent second weld patterns 242 in the outer ring region 210 is 0.3 mm, 0.5 mm, 0.8 mm, 1 mm, 1.2 mm, 1.5 mm, or the like.

In some embodiments, as shown in FIG. 5, two to four second weld patterns 242 are arranged at intervals in the outer ring region 210 along the radial direction of the electrode core 100, to increase the connection area between the outer ring region 210 and the tab welding region 110, thereby improving the overcurrent capability of the current collector 200, and ensuring the strength of connecting the outer ring region 210 to the tab welding region 110.

In some embodiments, a width of the outermost second weld pattern 242 in the outer ring region 210 is less than a width of an innermost second weld pattern 242 in the outer ring region 210. In other words, widths of the number of second weld patterns 242 in the outer ring region 210 are different. It should be noted that, a larger width of the second weld pattern 242 indicates a larger welding area between the outer ring region 210 and the tab welding region 110 and a deeper welding depth.

The thickness of the tab welding region 110 corresponding to the outer ring region 210 is different along the direction from outside to inside, the thickness of the tab welding region 110 close to an outer side of the outer ring region 210 is thin, and the thickness of the tab welding region 110 close to an inner side of the outer ring region 210 is thick. Therefore, when the width of the outermost second weld pattern 242 in the outer ring region 210 is set to be the same as the width of the innermost second weld pattern 242 in the outer ring region 210, over welding easily occurs between a region close to the outer side in the outer ring region 210 and the tab welding region 110, or poor welding easily occurs between a region close to the inner side in the outer ring region 210 and the tab welding region 110, affecting the welding effect between the outer ring region 210 and the tab welding region 110.

Therefore, in the present disclosure, a width of a second weld pattern 242 welded to the tab welding region 110 with the thin thickness in the outer ring region 210 is set to be less than a width of a second weld pattern 242 welded to the tab welding region 110 with the thick thickness. In this way, the welding effect between the outer ring region 210 and the tab welding region 110 can be ensured, and poor welding or over welding can be avoided.

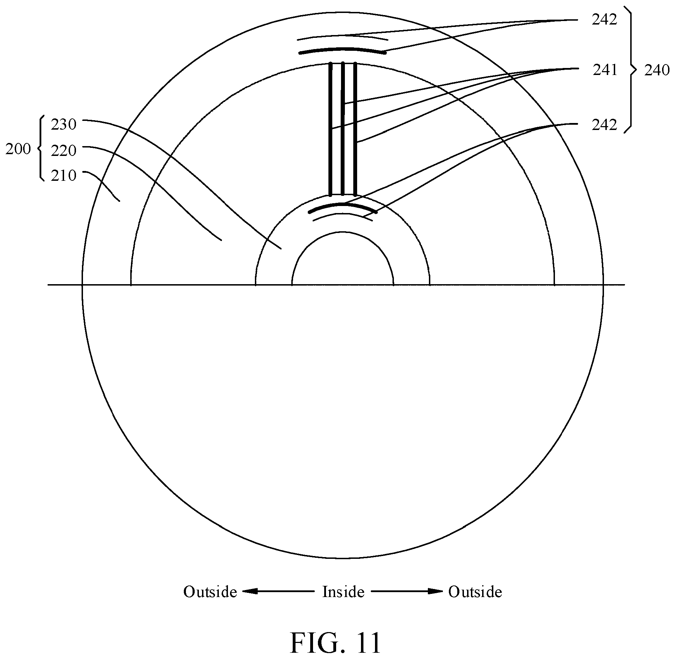

FIG. 5, FIG. 9, FIG. 10 and FIG. 11 respectively show the number of second weld patterns 242 in the outer ring region 210, and show that in the outer ring region 210, the outermost second weld pattern 242 is different from the innermost second weld pattern 242 in line thickness, to indicate that the width of the outermost second weld pattern 242 in the outer ring region 210 is less than the width of the innermost second weld pattern 242 in the outer ring region 210, for ease of understanding.

In some embodiments, at least one second weld pattern 242 is arranged in the outer ring region 210, and a radial width of each second weld pattern 242 in the outer ring region 210 is less than or equal to 0.5 mm. In other words, one second weld pattern 242 or a number of second weld patterns 242 may be arranged in the outer ring region 210, so that the outer ring region 210 can be welded to the tab welding region 110.

In addition, the thickness of the tab welding region 110 facing the outer ring region 210 along the radial direction of the electrode core 100 is different. Therefore, the radial width of the second weld pattern 242 in the outer ring region 210 is set to be less than or equal to 0.5 mm, so that a large difference in the thickness of the tab welding region 110 to which the same second weld pattern 242 in the outer ring region 210 is welded can be avoided. In this way, over welding of the tab welding region 110 with the thin thickness caused during welding at same power is avoided to a certain extent, to prevent the separator from being scalded, thereby ensuring the performance of the electrode core 100.

In a specific example, the radial width of the second weld pattern 242 in the outer ring region 210 is 0.1 mm, 0.2 mm, 0.3 mm, 0.4 mm, 0.5 mm, or the like.

In some embodiments, the second weld pattern 242 in the outer ring region 210 is formed in an arc shape, a straight line shape, or a wave shape. In other words, a shape of the second weld pattern 242 in the outer ring region 210 may be formed as one of the arc shape, the straight line shape or the wave shape, to reduce difficulty of forming the second weld pattern 242 in the outer ring region 210.

Certainly, in some other embodiments, the shape of the second weld pattern 242 in the outer ring region 210 may alternatively be formed as a combination of at least two of the arc shape, the straight line shape, or the wave shape.

It should be noted that, when the second weld patterns 242 in the outer ring region 210 are formed in the wave shape, a difference between dimensions of upper and lower wave shapes of a wave pattern is within 0.5 mm, so that the radial width of the second weld patterns 242 in the outer ring region 210 can be within 0.5 mm, thereby avoiding a large difference in the thickness of the tab welding region 110 to which the same second weld pattern 242 in the outer ring region 210 is welded.

In some embodiments, the second weld pattern 242 in the outer ring region 210 is formed in the arc shape. In this way, when the difficulty of forming the second weld pattern 242 in the outer ring region 210 is reduced, the second weld pattern 242 in the outer ring region 210 can also be controlled to extend along the circumferential direction of the electrode core 100. In this way, it is ensured that the thickness of the tab welding region 110 to which the second weld pattern 242 in the outer ring region 210 is welded is the same, thereby avoiding poor welding or over welding, and improving the operating performance of the cylindrical battery 1000.

In some embodiments, as shown in FIG. 1 and FIG. 5, a number of second weld patterns 242 arranged at intervals along the radial direction of the electrode core 100 are arranged in the inner ring region 230. In other words, the number of second weld patterns 242 are arranged at intervals in the inner ring region 230, and the number of second weld patterns 242 are arranged at intervals along the radial direction of the electrode core 100. The number of second weld patterns 242 can cooperate to increase a connection area between the inner ring region 230 and the tab welding region 110, thereby improving the overcurrent capability of the current collector 200, and ensuring strength of connecting the inner ring region 230 to the tab welding region 110.

In addition, the number of second weld patterns 242 in the inner ring region 230 are arranged at intervals along the radial direction of the electrode core 100, so that the number of second weld patterns 242 in the inner ring region 230 can be prevented from coming into contact. Because the thickness of the tab welding region 110 facing the inner ring region 230 along the radial direction of the electrode core 100 is different, if the number of second weld patterns 242 in the inner ring region 230 come into contact, over welding may occur in the tab welding region 110 with a thin thickness, and the separator is easily scalded. Therefore, the number of second weld patterns 242 in the inner ring region 230 are arranged at intervals along the radial direction of the electrode core 100, thereby preventing the separator from being scalded to a certain extent and improving the operating performance of the cylindrical battery 1000.

In some embodiments, as shown in FIG. 5, two to four second weld patterns 242 are arranged at intervals in the inner ring region 230 along the radial direction of the electrode core 100, to increase the connection area between the inner ring region 230 and the tab welding region 110, thereby improving the overcurrent capability of the current collector 200, and ensuring the strength of connecting the inner ring region 230 to the tab welding region 110.

In some embodiments, a width of an outermost second weld pattern 242 in the inner ring region 230 is greater than a width of an innermost second weld pattern 242 in the inner ring region 230. In other words, widths of the number of second weld patterns 242 in the inner ring region 230 are different. It should be noted that, a larger width of the second weld pattern 242 indicates a larger welding area between the inner ring region 230 and the tab welding region 110 and a deeper welding depth.

The thickness of the tab welding region 110 corresponding to the inner ring region 230 is different along the direction from outside to inside, the thickness of the tab welding region 110 close to an outer side of the inner ring region 230 is thick, and the thickness of the tab welding region 110 close to an inner side of the inner ring region 230 is thin. Therefore, when the width of the outermost second weld pattern 242 in the inner ring region 230 is set to be the same as the width of the innermost second weld pattern 242 in the inner ring region 230, over welding easily occurs between a region close to the inner side in the inner ring region 230 and the tab welding region 110, or poor welding easily occurs between a region close to the outer side in the inner ring region 230 and the tab welding region 110, affecting the welding effect between the inner ring region 230 and the tab welding region 110.

Therefore, in the present disclosure, a width of a second weld pattern 242 welded to the tab welding region 110 with the thick thickness in the inner ring region 230 is set to be greater than a width of a second weld pattern 242 welded to the tab welding region 110 with the thin thickness. In this way, the welding effect between the inner ring region 230 and the tab welding region 110 can be ensured, and poor welding or over welding can be avoided.

FIG. 5, FIG. 9, FIG. 10 and FIG. 11 respectively show the number of second weld patterns 242 in the inner ring region 230, and show that in the inner ring region 230, the outermost second weld pattern 242 is different from the innermost second weld pattern 242 in line thickness, to indicate that the width of the outermost second weld pattern 242 in the inner ring region 230 is greater than the width of the innermost second weld pattern 242 in the inner ring region 230, for ease of understanding.

In some embodiments, a value of a spacing between radially adjacent second weld patterns 242 in the inner ring region 230 ranges from 0.3 mm to 1.5 mm. The spacing between the radially adjacent second weld patterns 242 in the inner ring region 230 may be understood as H6 shown in FIG. 5. When a distance H6 between two adjacent second weld patterns 242 in the inner ring region 230 is short, the two adjacent second weld patterns 242 in the inner ring region 230 easily come into contact, causing over welding of the tab welding region 110 with a thin thickness. When the distance H6 between the two adjacent second weld patterns 242 in the inner ring region 230 is long, a large quantity of second weld patterns 242 cannot be arranged in the inner ring region 230, affecting the overcurrent capability of the current collector 200.

Therefore, in the present disclosure, the distance between the two adjacent second weld patterns 242 in the inner ring region 230 is set to range from 0.3 mm to 1.5 mm. In this way, when the two adjacent second weld patterns 242 in the inner ring region 230 are prevented from coming into contact, a large quantity of second weld patterns 242 can also be arranged in the inner ring region 230, thereby improving the overcurrent capability of the current collector 200.

In a specific example, the distance between the two adjacent second weld patterns 242 in the inner ring region 230 is 0.3 mm, 0.5 mm, 0.8 mm, 1 mm, 1.2 mm, 1.5 mm, or the like.

In some embodiments, as shown in FIG. 5, FIG. 6 and FIG. 7, along the direction parallel to the radial direction of the electrode core 100, a spacing H4 exists between an innermost second weld pattern 242 in the inner ring region 230 and an inner edge of the tab welding region 110. The innermost second weld pattern 242 in the inner ring region 230 is located on a radial outer side of the inner edge of the tab welding region 110. The inner edge of the tab welding region 110 described herein may be understood as an innermost side edge of the tab welding region 110 along the radial direction of the parallel electrode cores 100 and the direction from outside to inside, that is, a side edge of the tab welding region 110 around an outer periphery of the winding hole of the cylindrical battery 1000.

It should be noted that, because the thickness of the tab welding region 110 corresponding to the inner ring region 230 gradually becomes thinner along the direction from outside to inside, a thickness of the tab welding region 110 close to the inner edge of the tab welding region 110 is thin. When the innermost second weld pattern 242 in the inner ring region 230 is close to the inner edge of the tab welding region 110, a thickness of the tab welding region 110 facing the second weld pattern 242 is thin. In this case, when the current collector 200 is welded to the tab welding region 110 through the second weld pattern 242, the second weld pattern 242 easily penetrates the tab welding region 110, and the separator is easily scalded, reducing the performance of the cylindrical battery 1000.

Therefore, in the present disclosure, the innermost second weld pattern 242 in the inner ring region 230 is arranged on the radial outer side of the inner edge of the tab welding region 110 and arranged spaced away from the inner edge of the tab welding region 110. In this way, when it is ensured that the current collector 200 can be effectively welded to the tab welding region 110 through the second weld pattern 242 in the inner ring region 230, the second weld pattern 242 can also be prevented from penetrating the tab welding region 110 to a certain extent, thereby ensuring the welding effect.

In some embodiments, the spacing H4 is greater than or equal to 2 mm, to ensure a thickness of the tab welding region 110 facing the innermost second weld pattern 242 in the inner ring region 230, and prevent the second weld pattern 242 in the inner ring region 230 from penetrating the tab welding region 110, thereby ensuring the welding effect.

In some embodiments, at least one second weld pattern 242 is arranged in the inner ring region 230, and a radial width of each second weld pattern 242 in the inner ring region 230 is less than or equal to 0.5 mm. In other words, one second weld pattern 242 or a number of second weld patterns 242 may be arranged in the inner ring region 230, but the radial width of each second weld pattern 242 is less than or equal to 0.5 mm. The thickness of the tab welding region 110 facing the inner ring region 230 along the radial direction of the electrode core 100 is also different. Therefore, the radial width of the second weld pattern 242 in the inner ring region 230 is set to be less than or equal to 0.5 mm, so that a large difference in thicknesses of the tab welding region 110 to which the same second weld pattern 242 in the inner ring region 230 is welded can be avoided. In this way, over welding of the tab welding region 110 with the thin thickness caused during welding at same power is avoided, to prevent the separator from being scalded, thereby ensuring the performance of the electrode core 100.

In a specific example, the radial width of the second weld pattern 242 in the inner ring region 230 is 0.1 mm, 0.2 mm, 0.3 mm, 0.4 mm, 0.5 mm, or the like.

In some embodiments, the second weld pattern 242 in the inner ring region 230 is formed in an arc shape, a straight line shape, or a wave shape. In other words, a shape of the second weld pattern 242 in the inner ring region 230 may be formed as one of the arc shape, the straight line shape, or the wave shape, to reduce difficulty of forming the second weld pattern 242 in the inner ring region 230.

Certainly, in some other embodiments, the shape of the second weld pattern 242 in the inner ring region 230 may alternatively be formed as a combination of at least two of the arc shape, the straight line shape, or the wave shape.

It should be noted that, when the second weld patterns 242 in the inner ring region 230 are formed in the wave shape, a difference between dimensions of upper and lower wave shapes of a wave pattern is within 0.5 mm, so that the radial width of the second weld patterns 242 in the inner ring region 230 can be within 0.5 mm, thereby avoiding a large difference in the thickness of the tab welding region 110 to which the same second weld pattern 242 in the inner ring region 230 is welded.

In some embodiments, as shown in FIG. 5, the second weld pattern 242 in the inner ring region 230 is formed in the arc shape. In this way, when the difficulty of forming the second weld pattern 242 in the inner ring region 230 is reduced, the second weld pattern 242 in the inner ring region 230 can also be controlled to extend along the circumferential direction of the electrode core 100. In this way, it is ensured that the thickness of the tab welding region 110 to which the second weld pattern 242 in the inner ring region 230 is welded is the same, thereby avoiding poor welding or over welding, and improving the operating performance of the cylindrical battery 1000.

In some embodiments, as shown in FIG. 1 and FIG. 5, the first weld pattern 241 is formed as a continuously extending weld pattern. In other words, the first weld pattern 241 in the middle ring region 220 continuously extends along the radial direction of the electrode core 100. In this way, difficulty of forming the first weld pattern 241 can be reduced, thereby improving efficiency of welding the current collector 200 to the tab welding region 110.

In some embodiments, as shown in FIG. 5, the first weld pattern 241 is formed as a straight line pattern, to further reduce the difficulty of forming the first weld pattern 241.

Certainly, in some other embodiments, the first weld pattern 241 may alternatively be formed as a weld pattern of any single style, such as an arc pattern, a wave pattern, or a broken line pattern.

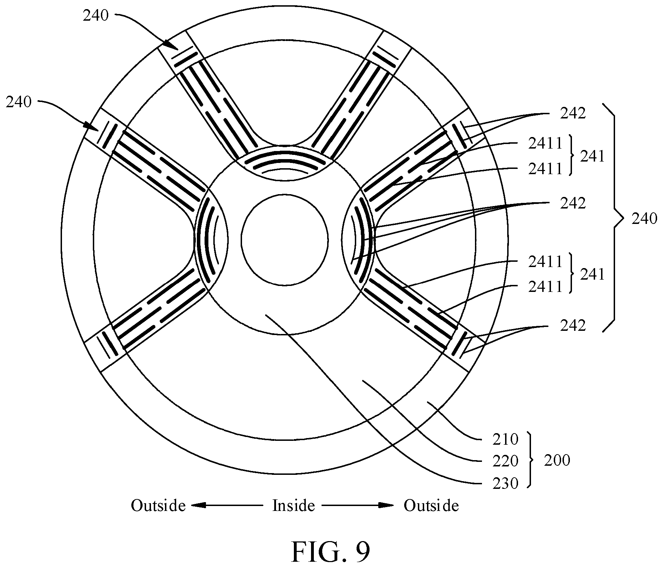

Optionally, as shown in FIG. 9, the first weld pattern 241 includes a number of weld subpatterns 2411 arranged at intervals along the radial direction of the electrode core 100. In other words, the first weld pattern 241 is not limited to being formed as the weld pattern continuously extending along the radial direction of the electrode core 100. The first weld pattern 241 may alternatively include the number of weld subpatterns 2411. The number of weld subpatterns 2411 are arranged at intervals along the radial direction of the electrode core 100. In this way, the current collector 200 can also be welded to the tab welding region 110 through the first weld pattern 241.

In some embodiments, a spacing between two adjacent weld subpatterns 2411 along the radial direction of the electrode core 100 is less than 2 mm, to ensure a welding area between the first weld pattern 241 and the tab welding region 110, thereby ensuring a welding area between the current collector 200 and the tab welding region 110, improving stability of relative positions of the current collector 200 and the tab welding region 110, and ensuring the overcurrent capability of the current collector 200.

In some embodiments, as shown in FIG. 5, FIG. 9, FIG. 10, and FIG. 11, a number of weld pattern groups 240 are arranged on the current collector 200 along the circumferential direction of the electrode core 100, and the number of weld pattern groups 240 are arranged along the circumferential direction. Each weld pattern group 240 includes first weld patterns 241 and second weld patterns 242. In this way, the number of weld pattern groups 240 can cooperate to increase the connection area between the current collector 200 and the tab welding region 110, thereby improving the overcurrent capability of the current collector 200, and ensuring the strength of connecting the current collector 200 to the tab welding region 110. In this way, the relative positions of the current collector 200 and the tab welding region 110 are stable, and the operating performance of the current collector 200 is ensured.

In some embodiments, as shown in FIG. 5, FIG. 9, FIG. 10, and FIG. 11, each weld pattern group 240 includes at least one first weld pattern group 243. Each first weld pattern group 243 includes a number of first weld patterns 241 arranged at intervals along the circumferential direction of the electrode core 100. In other words, the number of first weld patterns 241 are arranged in the middle ring region 220, and the number of first weld patterns 241 are arranged at intervals along the circumferential direction of the electrode core 100. The number of first weld patterns 241 cooperate to increase a connection area between the middle ring region 220 and the tab welding region 110, to further improve the overcurrent capability of the current collector 200, and ensure that relative positions of the middle ring region 220 and the tab welding region 110 are stable.

In some embodiments, as shown in FIG. 9, when the first weld pattern 241 includes a number of weld subpatterns 2411, an interval space is formed between two adjacent weld subpatterns 2411 along the radial direction of the electrode core 100. When each first weld pattern group 243 includes a number of first weld patterns 241 arranged at intervals along the circumferential direction of the electrode core 100, two adjacent interval spaces are alternately arranged along the circumferential direction of the electrode core 100, that is, the two adjacent interval spaces do not face each other along the circumferential direction of the electrode core 100. In this way, it is ensured that the number of first weld patterns 241 in the middle ring region 220 can cooperate to be simultaneously used for welding of the tab welding region 110 facing the middle ring region 220, and lack of welding of a part of the tab welding region 110 facing the middle ring region 220 along the radial direction of the electrode core 100 is avoided, thereby ensuring a welding effect between the middle ring region 220 and the tab welding region 110.

In some embodiments, as shown in FIG. 5, FIG. 9, FIG. 10, and FIG. 11, each first weld pattern group 243 includes the number of first weld patterns 241 arranged in parallel. In other words, the number of first weld patterns 241 in each first weld pattern group 243 are arranged in parallel. In this way, when it is ensured that each first weld pattern 241 can be used for welding of the tab welding region 110 facing the middle ring region 220, difficulty of forming the number of first weld patterns 241 can also be reduced, thereby reducing difficulty of welding the middle ring region 220 to the tab welding region 110.

In some embodiments, at least a part of the first weld patterns 241 in each first weld pattern group 243 intersect. When a number of intersections exist, a spacing between adjacent intersections is greater than 2 mm (not shown in the figure of this example). In other words, it is not limited that the number of first weld patterns 241 in each weld pattern group 240 are arranged in parallel. At least a part of the first weld patterns 241 in each weld pattern group 240 may alternatively intersect. In addition, when two first weld patterns 241 simultaneously intersect a same first weld pattern 241, a number of intersections exist, and a spacing between two adjacent intersections is set to be greater than 2 mm. In this way, overlapping of the two adjacent intersections can be avoided, thereby preventing overheating caused by heat superposition, and ensuring stability of a welding process of the middle ring region 220 and the tab welding region 110.

In other words, in the present disclosure, the spacing between the adjacent intersections is set to be greater than 2 mm, so that a risk of scalding the separator caused by heat superposition or heat conduction during local welding can be effectively resolved, and the stability of the welding process can be improved.

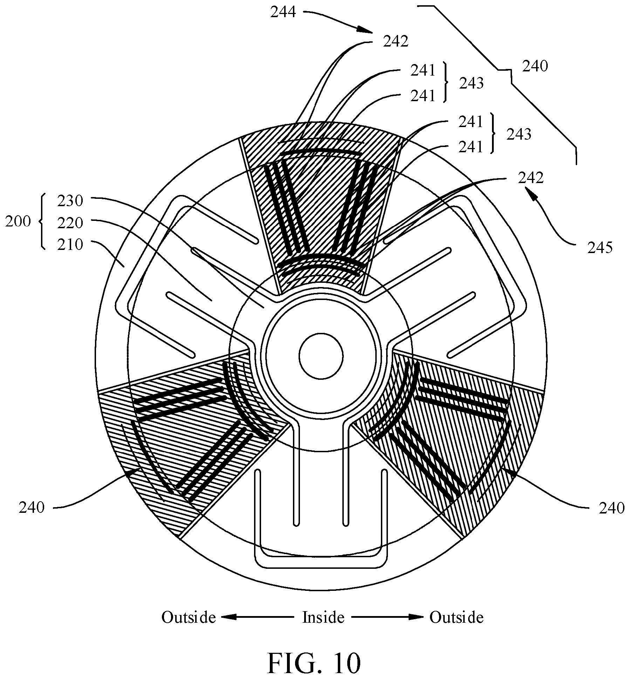

In some embodiments, as shown in FIG. 9 and FIG. 10, each weld pattern group 240 includes a number of first weld pattern groups 243 arranged at intervals along the circumferential direction of the electrode core 100. Each first weld pattern group 243 includes a number of first weld patterns 241 arranged at intervals along the circumferential direction of the electrode core 100. Second weld patterns 242 are arranged on both a radial inner side and a radial outer side of each first weld pattern group 243. In other words, each weld pattern group 240 includes the number of first weld pattern groups 243, the number of first weld pattern groups 243 are arranged at intervals along the circumferential direction of the electrode core 100, and each first weld pattern group 243 includes the number of first weld patterns 241 arranged at intervals along the circumferential direction of the electrode core 100, to maximize an increase in a quantity of the first weld patterns 241. In this way, a connection area between the middle ring region 220 and the tab welding region 110 is ensured, thereby improving the overcurrent capability of the current collector 200; and the relative positions of the current collector 200 and the tab welding region 110 are stable, thereby ensuring the operating performance of the current collector 200.

In addition, the second weld patterns 242 are arranged on both the radial inner side and the radial outer side of each first weld pattern group 243. In this way, when it is ensured that the second weld patterns 242 are arranged in both the outer ring region 210 and the inner ring region 230 of the current collector 200, a coverage area of the second weld patterns 242 can also be ensured, thereby further increasing the connection area between the current collector 200 and the tab welding region 110, and improving the overcurrent capability of the current collector 200.

In some embodiments, as shown in FIG. 10, second weld patterns 242 respectively located on radial inner sides of two first weld pattern groups 243 are formed as a same weld pattern. In other words, second weld patterns 242 located on the radial inner side of one of the first weld pattern groups 243 also extend toward the other of the first weld pattern groups 243. In this way, the second weld patterns 242 can also be located on the radial inner side of the other of the first weld pattern groups 243, and difficulty of forming the second weld patterns 242 located on the radial inner sides of the first weld pattern groups 243 can be reduced, thereby reducing difficulty of welding the current collector 200 to the tab welding region 110.

Correspondingly, as shown in FIG. 10, second weld patterns 242 respectively located on radial outer sides of the two first weld pattern groups 243 are formed as a same weld pattern. In other words, second weld patterns 242 located on the radial outer side of one of the first weld pattern groups 243 also extend toward the other of the first weld pattern groups 243. In this way, the second weld patterns 242 can also be located on the radial outer side of the other of the first weld pattern groups 243, and difficulty of forming the second weld patterns 242 located on the radial outer sides of the first weld pattern groups 243 can be reduced, thereby reducing the difficulty of welding the current collector 200 to the tab welding region 110.

Certainly, in some other embodiments, structural forms of the second weld patterns 242 located on the radial outer sides of the two first weld pattern groups 243 may alternatively be properly arranged according to a shape of the current collector 200. As shown in FIG. 5, second weld patterns 242 located on radial outer sides of two first weld pattern groups 243 are independent of each other; and/or second weld patterns 242 located on radial inner sides of the two first weld pattern groups 243 are independent of each other (not shown in the figure of this example).

In some embodiments, as shown in FIG. 5, each weld pattern group 240 includes a number of outer ring second weld pattern groups 244. The number of outer ring second weld pattern groups 244 are arranged corresponding to the number of first weld pattern groups 243. The number of outer ring second weld pattern groups 244 are arranged in the outer ring region 210 and located on radial outer sides of the first weld pattern groups 243. Each outer ring second weld pattern group 244 includes a number of second weld patterns 242 arranged at intervals along the radial direction of the electrode core 100. In this way, the second weld patterns 242 are arranged in the outer ring region 210 of the current collector 200, and the number of outer ring second weld pattern groups 244 can also ensure the coverage area of the second weld patterns 242, thereby increasing the connection area between the current collector 200 and the tab welding region 110, and improving the overcurrent capability of the current collector 200.

In some embodiments, as shown in FIG. 5, a quantity of the number of outer ring second weld pattern groups 244 correspond to a quantity of the number of first weld pattern groups 243. In other words, when there are two first weld pattern groups 243, there are also two outer ring second weld pattern groups 244. When there are three first weld pattern groups 243, there are also three outer ring second weld pattern groups 244. In this way, the number of outer ring second weld pattern groups 244 are in a one-to-one correspondence to the number of first weld pattern groups 243, so that an outer ring second weld pattern group 244 is arranged on a radial outer side of each first weld pattern group 243, and the coverage area of the second weld patterns 242 is ensured, thereby ensuring the connection area between the current collector 200 and the tab welding region 110.

In some embodiments, each weld pattern group 240 includes a number of inner ring second weld pattern groups 245. The number of inner ring second weld pattern groups 245 are arranged corresponding to the number of first weld pattern groups 243 (not shown in the figure of this example). The number of inner ring second weld pattern groups 245 are arranged in the inner ring region 230 and located on radial inner sides of the first weld pattern groups 243. Each inner ring second weld pattern group 245 includes a number of second weld patterns 242 arranged at intervals along the radial direction of the electrode core 100. In this way, the second weld patterns 242 are arranged in the inner ring region 230 of the current collector 200, and the number of inner ring second weld pattern groups 245 can also ensure the coverage area of the second weld patterns 242, thereby increasing the connection area between the current collector 200 and the tab welding region 110, and improving the overcurrent capability of the current collector 200.

In some embodiments, a quantity of the number of inner ring second weld pattern groups 245 correspond to a quantity of the number of first weld pattern groups 243. In other words, when there are two first weld pattern groups 243, there are also two inner ring second weld pattern groups 245. When there are three first weld pattern groups 243, there are also three inner ring second weld pattern groups 245. In this way, the number of inner ring second weld pattern groups 245 are in a one-to-one correspondence to the number of first weld pattern groups 243, so that an inner ring second weld pattern group 245 is arranged on a radial inner side of each first weld pattern group 243, and the coverage area of the second weld patterns 242 is ensured, thereby ensuring the connection area between the current collector 200 and the tab welding region 110.

In a specific example, each weld pattern group 240 includes a number of outer ring second weld pattern groups 244 and a number of inner ring second weld pattern groups 245. The number of outer ring second weld pattern groups 244 and the number of inner ring second weld pattern groups 245 are arranged corresponding to the number of first weld pattern groups 243. The number of outer ring second weld pattern groups 244 are arranged in the outer ring region 210 and located on radial outer sides of the first weld pattern groups 243. Each outer ring second weld pattern group 244 includes a number of second weld patterns 242 arranged at intervals along the radial direction of the electrode core 100. The number of inner ring second weld pattern groups 245 are arranged in the inner ring region 230 and located on radial inner sides of the first weld pattern groups 243. Each inner ring second weld pattern group 245 includes a number of second weld patterns 242 arranged at intervals along the radial direction of the electrode core 100. In this way, a number of second weld patterns 242 are arranged in both the outer ring region 210 and the inner ring region 230 of the current collector 200, and the coverage area of the second weld patterns 242 can be ensured, thereby increasing the connection area between the current collector 200 and the tab welding region 110, and improving the overcurrent capability of the current collector 200.

In some embodiments, as shown in FIG. 5, each weld pattern group 240 includes a number of outer ring second weld pattern groups 244 and one inner ring second weld pattern group 245. The number of outer ring second weld pattern groups 244 are arranged corresponding to the number of first weld pattern groups 243. The number of outer ring second weld pattern groups 244 are arranged in the outer ring region 210 and located on radial outer sides of the first weld pattern groups 243. Each outer ring second weld pattern group 244 includes a number of second weld patterns 242 arranged at intervals along the radial direction of the electrode core 100. The inner ring second weld pattern group 245 is arranged in the inner ring region 230 and located on radial inner sides of the number of first weld pattern groups 243. The inner ring second weld pattern group 245 includes a number of second weld patterns 242 arranged at intervals along the radial direction of the electrode core 100. In other words, it is not limited that each weld pattern group 240 includes the number of outer ring second weld pattern groups 244 and the number of inner ring second weld pattern groups 245. Each weld pattern group 240 may alternatively include the number of outer ring second weld pattern groups 244 and one inner ring second weld pattern group 245. The one inner ring second weld pattern group 245 is located on the radial inner sides of the number of first weld pattern groups 243. In this way, when a number of second weld patterns 242 are arranged in both the outer ring region 210 and the inner ring region 230 of the current collector 200 to ensure the coverage area of the second weld patterns 242, difficulty of forming the second weld patterns 242 located on the radial inner sides of the first weld pattern groups 243 can also be reduced, thereby reducing the difficulty of welding the current collector 200 to the tab welding region 110.

In some other embodiments, as shown in FIG. 10, each weld pattern group 240 includes one outer ring second weld pattern group 244 and one inner ring second weld pattern group 245. The outer ring second weld pattern group 244 is arranged in the outer ring region 210 and located on radial outer sides of the number of first weld pattern groups 243. The outer ring second weld pattern group 244 includes a number of second weld patterns 242 arranged at intervals along the radial direction of the electrode core 100. The inner ring second weld pattern group 245 is arranged in the inner ring region 230 and located on radial inner sides of the number of first weld pattern groups 243. The inner ring second weld pattern group 245 includes a number of second weld patterns 242 arranged at intervals along the radial direction of the electrode core 100. In other words, it is not limited that each weld pattern group 240 includes the number of outer ring second weld pattern groups 244 and the number of inner ring second weld pattern groups 245, and it is also not limited that each weld pattern group 240 includes the number of outer ring second weld pattern groups 244 and one inner ring second weld pattern groups 245. Each weld pattern group 240 may alternatively include one outer ring second weld pattern group 244 and one inner ring second weld pattern group 245. In this way, difficulty of forming the second weld patterns 242 located on the radial inner sides of the first weld pattern groups 243 is reduced, and difficulty of forming the second weld patterns 242 located on the radial outer sides of the first weld pattern groups 243 is reduced, thereby reducing the difficulty of welding the current collector 200 to the tab welding region 110.

Certainly, each weld pattern group 240 may alternatively include one outer ring second weld pattern group 244 and a number of inner ring second weld pattern groups 245. Details are not described herein in detail.

In some embodiments, the second weld pattern 242 in the outer ring second weld pattern group 244 and the second weld pattern 242 in the inner ring second weld pattern group 245 are formed in respectively independent arc shapes, straight line shapes, or wave shapes. In other words, the second weld pattern 242 in the outer ring second weld pattern group 244 and the second weld pattern 242 in the inner ring second weld pattern group 245 are independent of each other, and may be respectively formed in arc shapes, straight line shapes, or wave shapes, to reduce the difficulty of forming the second weld pattern 242 in the outer ring second weld pattern group 244 and forming the second weld pattern 242 in the inner ring second weld pattern group 245.

In conclusion, according to the cylindrical battery 1000 in the present disclosure, based on a stacked structure of tabs 120 on the end surface of the cylindrical battery 100 and physical characteristics such as a high melting point, high heat conduction, and a high specific heat capacity of a copper aluminum foil, the current collector 200 is partitioned, and weld patterns with different styles and different directions, and staggered and intermittent welding manners are designed. In addition, the current collector 200 is welded to the tabs 120 based on adjustment for power. In this way, impact of a stack difference of the tabs 120 on welding stability is resolved, and a risk of scalding the separator caused by local heat superposition or heat conduction during welding can be resolved, thereby improving the stability of the welding process.

Through the foregoing arrangement, after the current collector 200 is peeled off, it can be found that heights of welding dissolution bosses on a peeling surface on back surfaces of the weld patterns are consistent. The weld patterns can penetrate all the tabs 120 along the radial direction of the electrode core 100 and form an effective overcurrent connection, so that an all-tab overcurrent connection is realized. There is no interruption caused by poor welding on the weld patterns, and there is no blacking of the tabs 120 caused by over welding or there is no whiting of the weld patterns caused by over welding. In addition, the tabs 120 are peeled off evenly. In this way, the stability of the process is high.

Therefore, the foregoing manner of welding the current collector 200 to the tabs 120 in the present disclosure may be applied to performance requirements of high-magnification charging and discharging of an all-tab battery core.

The following describes a power consumption device according to the embodiments of the present disclosure.

The power consumption device according to the embodiments of the present disclosure includes a cylindrical battery 1000.

The cylindrical battery 1000 is the foregoing cylindrical battery 1000. Details of a specific structure of the cylindrical battery 1000 are not described herein again.

It can be learned from the foregoing structure that, according to the power consumption device in the embodiments of the present disclosure, the foregoing cylindrical battery 1000 is used, to improve operating performance of the power consumption device.

It should be noted that, the power consumption device in the present disclosure may be, but is not limited to a mobile phone, a tablet computer, a notebook computer, an electric toy, an electric tool, an electric bicycle, an electric vehicle, a ship, a spacecraft, or the like. The electric toy may include a fixed or mobile electric toy, for example, a game console, an electric vehicle toy, an electric ship toy, an electric aircraft toy, or the like. The spacecraft may include an aircraft, a rocket, a space shuttle, a spaceship, or the like. The electric tool includes a metal cutting electric tool, a grinding electric tool, an assembly electric tool, or a railway electric tool, for example, an electric drill, an electric wheel grinder, an electric wrench, an electric screwdriver, an electric hammer, a percussion electric drill, a concrete shaker, or an electric planer.

In the description of the present disclosure, it should be noted that, unless otherwise explicitly specified or defined, the terms such as "install" and "connection" should be understood in a broad sense. For example, the connection may be a fixed connection, a detachable connection, or an integral connection; or the connection may be a mechanical connection or an electrical connection. The specific meanings of the above terms in the present disclosure may be understood according to specific circumstances for a person of ordinary skill in the art.

In a same weld pattern group 240, FIG. 5 shows two second weld patterns 242 in the outer ring region 210, three first weld patterns 241 in the middle ring region 220, and three second weld patterns 242 in the inner ring region 230 for illustrative purposes. However, after reading the foregoing technical solutions, a person of ordinary skill may clearly understand that the solutions are applied to technical solutions of other quantities of first weld patterns 241 and second weld patterns 242, which also falls within the protection scope of the present disclosure.

Other forming of the cylindrical battery 1000 and the power consumption device having the cylindrical battery 1000 according to the embodiments of the present disclosure is known to a person of ordinary skill in the art, and is not described in detail herein.

In the descriptions of this specification, descriptions of reference terms such as "an embodiment" and "a specific example" mean that specific features, structures, materials, or characteristics that are described with reference to the embodiment or the example are included in at least one embodiment or example of the present disclosure. In this specification, schematic descriptions of the foregoing terms do not necessarily point at a same embodiment or example. In addition, the described specific features, structures, materials, or characteristics may be combined in a proper manner in any one or more of the embodiments or examples.

Although the embodiments of the present disclosure have been shown and described, persons of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A cylindrical battery, comprising:
an electrode core, the electrode core being formed in a cylindrical shape, and a tab welding region being arranged on at least one side of the electrode core along an axial direction of the electrode core; and
a current collector, the current collector being adapted to weld to the tab welding region, an outer ring region, a middle ring region, and an inner ring region being arranged on the current collector from outside to inside along a direction parallel to a radial direction of the electrode core, the middle ring region being located between the outer ring region and the inner ring region, a first weld pattern being arranged in the middle ring region, a second weld pattern being arranged in at least one of the inner ring region or the outer ring region, the first weld pattern extending along the radial direction of the electrode core, the second weld pattern extending along a circumferential direction of the electrode core, and the current collector being welded to the tab welding region through the first weld pattern and the second weld pattern.

2. The cylindrical battery according to claim 1, wherein along the radial direction of the electrode core, the electrode core comprises a plurality of tabs, the plurality of tabs are bent inward to define the tab welding region, a bent length of each tab is L1, a radial dimension of the inner ring region is H1, a radial dimension of the outer ring region is H2, and the cylindrical battery satisfies: 0.8L1<H1<1.3L1, and/or 0.8L1<H2<1.3L1.

3. The cylindrical battery according to claim 1, wherein the second weld pattern is arranged in the outer ring region, and along the direction parallel to the radial direction of the electrode core, a spacing H3 exists between an outermost second weld pattern in the outer ring region and an outer peripheral wall of the electrode core.

4. The cylindrical battery according to claim 3, wherein the spacing H3 is greater than or equal to 2 mm.

5. The cylindrical battery according to claim 1, wherein at least one second weld pattern is arranged in the outer ring region, and a radial width of each second weld pattern in the outer ring region is less than or equal to 0.5 mm; and/or
at least one second weld pattern is arranged in the inner ring region, and a radial width of each second weld pattern in the inner ring region is less than or equal to 0.5 mm.

6. The cylindrical battery according to claim 5, wherein the second weld pattern in the outer ring region is formed in an arc shape, a straight line shape, or a wave shape.

7. The cylindrical battery according to claim 1, wherein a plurality of second weld patterns arranged at intervals along the radial direction of the electrode core are arranged in the outer ring region.

8. The cylindrical battery according to claim 1, wherein a plurality of second weld patterns arranged at intervals along the radial direction of the electrode core are arranged in the inner ring region,
preferably wherein a value of a spacing between radially adjacent second weld patterns in the inner ring region ranges from 0.3 mm to 1.5 mm;
or wherein the second weld pattern in the inner ring region is formed in an arc shape, a straight line shape, or a wave shape.

9. The cylindrical battery according to claim 8, wherein along the direction parallel to the radial direction of the electrode core, a spacing H4 exists between an innermost second weld pattern in the inner ring region and an inner edge of the tab welding region, and the innermost second weld pattern in the inner ring region is located on a radial outer side of the inner edge of the tab welding region, preferably wherein the spacing H4 is greater than or equal to 2 mm.

10. The cylindrical battery according to claim 1, wherein the first weld pattern is formed as a continuously extending weld pattern; or
the first weld pattern comprises a plurality of weld subpatterns arranged at intervals along the radial direction of the electrode core.

11. The cylindrical battery according to any one of claims 1 to 10, wherein along the circumferential direction of the electrode core, a plurality of weld pattern groups arranged at intervals along the circumferential direction of the electrode core are arranged on the current collector, and each weld pattern group comprises first weld patterns and second weld patterns,
preferably wherein each weld pattern group comprises at least one first weld pattern group, and each first weld pattern group comprises a plurality of first weld patterns arranged at intervals along the circumferential direction of the electrode core,
and more preferably wherein each first weld pattern group comprises the plurality of first weld patterns arranged in parallel; or wherein at least a part of the first weld patterns in each first weld pattern group intersect, and when a plurality of intersections exist, a spacing between adjacent intersections is greater than 2 mm.

12. The cylindrical battery according to claim 11, wherein each weld pattern group comprises a plurality of first weld pattern groups arranged at intervals along the circumferential direction of the electrode core, each first weld pattern group comprises a plurality of first weld patterns arranged at intervals along the circumferential direction of the electrode core, and second weld patterns are arranged on both a radial inner side and a radial outer side of each first weld pattern group.

13. The cylindrical battery according to claim 12, wherein each weld pattern group comprises a plurality of outer ring second weld pattern groups arranged corresponding to the plurality of first weld pattern groups, the plurality of outer ring second weld pattern groups are arranged in the outer ring region and located on radial outer sides of the first weld pattern groups, and each outer ring second weld pattern group comprises a plurality of second weld patterns arranged at intervals along the radial direction of the electrode core; and/or
each weld pattern group comprises a plurality of inner ring second weld pattern groups arranged corresponding to the plurality of first weld pattern groups, the plurality of inner ring second weld pattern groups are arranged in the inner ring region and located on radial inner sides of the first weld pattern groups, and each inner ring second weld pattern group comprises a plurality of second weld patterns arranged at intervals along the radial direction of the electrode core;
or wherein each weld pattern group comprises a plurality of outer ring second weld pattern groups arranged corresponding to the plurality of first weld pattern groups and one inner ring second weld pattern group, the plurality of outer ring second weld pattern groups are arranged in the outer ring region and located on radial outer sides of the first weld pattern groups, each outer ring second weld pattern group comprises a plurality of second weld patterns arranged at intervals along the radial direction of the electrode core, the inner ring second weld pattern group is arranged in the inner ring region and located in radial inner sides of the plurality of first weld pattern groups, and the inner ring second weld pattern group comprises a plurality of second weld patterns arranged at intervals along the radial direction of the electrode core.

14. The cylindrical battery according to claim 13, wherein the second weld pattern in the outer ring second weld pattern group and the second weld pattern in the inner ring second weld pattern group are formed in respectively independent arc shapes, straight line shapes, or wave shapes.

15. A power consumption device, comprising the cylindrical battery according to any one of claims 1 to 14.
